(19) 
Europäisches
Patentamt
European
Patent Office
Office européen
des brevets

(11) **EP 3 091 046 A1**

(12) **EUROPEAN PATENT APPLICATION**
published in accordance with Art. 153(4) EPC

(43) Date of publication:
**09.11.2016  Bulletin 2016/45**

(51) Int Cl.:
**C08G 63/12** [(2006.01)]      **C08G 63/82** [(2006.01)]
**C08G 63/16** [(2006.01)]      **C08L 67/02** [(2006.01)]

(21) Application number: **14876928.4**

(22) Date of filing: **24.12.2014**

(86) International application number:
**PCT/KR2014/012853**

(87) International publication number:
**WO 2015/102305 (09.07.2015 Gazette 2015/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **30.12.2013  KR 20130167503
30.12.2013  KR 20130167505**

(71) Applicant: **LOTTE Fine Chemical Co., Ltd.
Ulsan, 44714 (KR)**

(72) Inventors:
• **RYUM, Jung**
  **Seoul 135-786 (KR)**
• **CHUN, Jong Pil**
  **Daejeon 305-728 (KR)**
• **CHA, Bum Gyu**
  **Seoul 151-836 (KR)**

(74) Representative: **Kador & Partner
Corneliusstraße 15
80469 München (DE)**

(54) **COMPOSITION FOR PRODUCING BIODEGRADABLE POLYESTER RESIN, AND PRODUCTION METHOD FOR BIODEGRADABLE POLYESTER RESIN**

(57)    A composition for preparing a biodegradable polyester resin and a method of preparing the biodegradable polyester resin are provided. The composition for preparing a biodegradable polyester resin includes: a dicarboxylic acid, a diol, a catalyst, and a deactivating agent including an element (L) that may reduce the activity of the catalyst, wherein the amount of a metal (M) in the catalyst and the amount of the element (L) satisfy the following condition on the basis of a weight ratio: $1.5 \leq M/L \leq 8.0$.

EP 3 091 046 A1

**Description**

TECHNICAL FIELD

The present disclosure relates to a composition for preparing a biodegradable polyester resin and a method of preparing a biodegradable polyester resin, and more particularly, a composition for preparing a biodegradable polyester resin, including a catalyst and a deactivating agent, and a method of preparing a biodegradable polyester resin.

BACKGROUND ART

Plastic has high functionality and durability and is practically useful in our daily life. However, conventional plastics are slowly degraded by microorganisms after being reclaimed and discharge harmful gas when they are incinerated, and consequentially may cause environmental pollution. As these problems of conventional plastics are recognized, biodegradable plastics have been developed.

Biodegradable polyester resins of any other biodegradable plastics are drawing more attention. Biodegradable polyester resins refer to polymers which may be degraded by natural microorganisms, including bacteria, algae, and fungi, and the like, into water and carbon dioxide, or into water and methane gas. Biodegradable polyester resins are presented as a powerful solution for the prevention of environmental pollution caused by reclamation or incineration.

In general, biodegradable polyester resins may be prepared by polymerization reactions, including an esterification reaction and a polycondensation reaction. Catalysts such as antimony compounds or titanium compounds may be used to facilitate these reactions. However, such catalysts may increase the rate of hydrolysis reaction as a backward reaction as well as the rate of polymerization reaction as a forward reaction. A catalyst remaining in such a composition for preparing a polyester resin may also facilitate side reactions, including thermal decomposition, oxidation, and hydrolysis, in post-processes.

Using a high-activity catalyst or excessive catalyst may facilitate both backward reactions and side reactions, as described above, and consequentially result in a biodegradable polyester resin with undesirable chromaticity (i.e., high yellowness) and deteriorated physical properties due to an increased acid value.

DETAILED DESCRIPTION OF THE INVENTION

TECHNICAL PROBLEM

The present invention provides a composition for preparing a biodegradable polyester resin, including a catalyst and a deactivating agent.

The present invention also provides a method of preparing a biodegradable polyester resin using the composition.

TECHNICAL SOLUTION

According to an aspect of the present invention, there is provided a composition for preparing a biodegradable polyester resin, the composition including: a dicarboxylic acid; a diol; a catalyst; and a deactivating agent comprising an element (L) that may reduce the activity of the catalyst, wherein the amount of a metal (M) in the catalyst and the amount of the element (L) satisfy the following condition on the basis of a weight ratio: $1.5 \leq M/L \leq 8.0$.

The dicarboxylic acid may include an aromatic dicarboxylic acid and an aliphatic dicarboxylic acid, the diol may include at least one selected from an aliphatic diol and an aromatic diol, and the amount of the metal (M) in the catalyst and the amount of the element (L) may satisfy the following condition on the basis of a weight ratio: $1.5 \leq M/L \leq 3.5$.

The dicarboxylic acid may be a substituted or unsubstituted C4-C10 aliphatic dicarboxylic acid, the diol may include a substituted or unsubstituted C2-C10 aliphatic diol, and the amount of the metal (M) in the catalyst and the amount of the element (L) may satisfy the following condition on the basis of a weight ratio: $3.0 \leq M/L \leq 8.0$.

The catalyst may include at least one metal compound selected from the group consisting of calcium acetate, manganese acetate, magnesium acetate, zinc acetate, monobutyl tin oxide, dibutyl tin oxide, dibutyltin dichloride, monobutylhydroxy tin oxide, octyltin, tetrabutyl tin, tetraphenyl tin, triethyl titanate, acetyl tripropyl titanate, tetramethyl titanate, tetrapropyl titanate, tetraisopropyl titanate, tetra n-butyl titanate, and tetra(2-ethylhexyl)titanate. The amount of the catalyst may be from about 0.001 to about 3 parts by weight based on 100 parts by weight of a total amount of the dicarboxylic acid and the diol.

A particularly suitable amount of the catalyst may be from about 0.01 to about 3 parts by weight based on 100 parts by weight of a total amount of the aromatic dicarboxylic acid, the aliphatic dicarboxylic acid and the diol.

The amount of the catalyst may be from about 0.001 to about 0.5 parts by weight based on 100 parts by weight of a total amount of the aliphatic dicarboxylic acid and the diol.

The element (L) may include phosphorus (P), and the deactivating agent may include at least one phosphorus compound selected from the group consisting of phosphorous acid, phosphonous acid, trimethyl phosphite, triethyl phosphite, tripropyl phosphite, triphenyl phosphite, sodium phosphite, sodium hypophosphite, diphenyl isodecyl phosphite, phenyl diisodecyl phosphite, and trisisodecyl phosphite.

The composition may further include at least one selected from a color stabilizing agent and a branching agent.

The branching agent may include glycerol, pentaerythritol, tartaric acid, malic acid, citric acid, trimethylolpropane, trimethylolethane, polyether triol, trimesic acid, trimellitic acid, trimellitic anhydride, pyromellitic acid, pyromellitic dianhydride, or a combination thereof, and the amount of the branching agent is from about 0.0005 to about 0.05 part by mole based on 1 part by mole of the dicarboxylic acid.

According to another aspect of the present invention, there is provided a method of preparing a biodegradable polyester resin, the method including: adding a dicarboxylic acid, a diol, a catalyst, and a deactivating agent including an element (L) that may reduce the activity of the catalyst into a reactor, and esterifying the dicarboxylic acid and the diol (esterification step); and polycondensing a product of the esterification step to obtain the biodegradable polyester resin (polycondensation step), wherein the amount of a metal (M) in the catalyst and the amount of the element (L) satisfy the following condition on the basis of a weight ratio: $1.5 \le M/L \le 8.0$.

The method may further include after the polycondensation step, adding about 0.01 to about 5 parts by weight of a chain extender based on 100 parts by weight of the biodegradable polyester to allow reaction of the chain extender with the biodegradable polyester resin (chain extension step).

In some embodiments, the biodegradable polyester resin may have a weight average molecular weight of about 130,000 to about 150,000.

In other some embodiments, the biodegradable polyester resin may have a weight average molecular weight of about 150,000 or greater.

The biodegradable polyester resin may have an acid value greater than 0 to about 1.6 mgKOH/g or less, and a b* value of 10 or less in the color space of CIE1976 L*a*b*, wherein L* denotes lightness value, a* denotes red value, b* denotes yellow value.

ADVANTAGEOUS EFFECTS

As described above, according to the one or more embodiments, a composition for preparing a biodegradable polyester resin may form a biodegradable polyester resin with improved chromaticity and good thermal stability. The biodegradable polyester resin may have a low acid value and consequentially good durability, due to suppressed decomposition reaction caused by heat or moisture.

A method of preparing a biodegradable polyester resin may result in a small amount of a chain extender in the resulting biodegradable polyester resin, so that the biodegradable polyester resin may have low toxicity.

BEST MODE

Hereinafter, embodiments of a composition for preparing a biodegradable polyester resin will now be described.

As used herein, the term 「polyester」 refers to a synthetic polymer prepared by an esterification reaction and a polycondensation reaction of at least one di-functional or three or more multi-functional carboxylic acid with at least one di-functional or three or more multi-functional hydroxy compounds.

As used herein, the term 「dicarboxylic acid」 refers to a dicarboxylic acid itself, an ester derivative of dicarboxylic acid, an acyl halide derivative of dicarboxylic acid, an anhydride derivative of dicarboxylic acid, or any combinations thereof.

As used herein, the term 「diol」 refers to a compound including at least two hydroxy groups.

An aspect of the present disclosure provides a composition for preparing a biodegradable polyester resin, the composition including dicarboxylic acid, diol, a catalyst, and a deactivating agent including an element (L) that may reduce the activity of the catalyst, wherein the amount of a metal (M) in the catalyst and the amount of the element (L) satisfy the following condition on the basis of a weight ratio: $1.5 \le M/L \le 8.0$.

The dicarboxylic acid may include at least one dicarboxylic acid selected from an aliphatic dicarboxylic acid and an aromatic dicarboxylic acid.

For example, the dicarboxylic acid may include at least one dicarboxylic acid selected from a substituted or unsubstituted C4-C10 aliphatic dicarboxylic acid and a substituted or unsubstituted C8-C20 aromatic dicarboxylic acid.

For example, the dicarboxylic acid may include at least one dicarboxylic acid selected from the group consisting of aliphatic dicarboxylic acids including malonic acid, succinic acid, glutaric acid, 2-methylglutaric acid, 3-methylglutaric acid, adipic acid, pimelic acid, azelaic acid, sebacic acid, undecanedioic acid, dodecanedioic acid, brassylic acid, tetradecanedioic acid, fumaric acid, 2,2-dimethylglutaric acid, suberic acid, maleic acid, itaconic acid, and any combinations thereof; and atomatic dicarboxylic acids including terephthalic acid, isophthalic acid, 2,6-naphthoic acid, 1,5-naphthoic acid, and any combinations thereof.

The diol may include at least one diol selected from an aliphatic diol and an aromatic diol. For example, the diol may include at least one diol selected from a substituted or unsubstituted C2-C10 aliphatic diol and a substituted or unsubstituted C6-C20 aromatic diol.

For example, the diol may include at least one diol selected from the group consisting of aliphatic diols including ethanediol, 1,2-propanediol, 1,3-propanediol, 1,2-butanediol, 1,4-butanediol, 1,5-pentanediol, 1,6-hexanediol, 2,4-dimethyl-2-ethyl-1,3-hexanediol, 2,2-dimethyl-1,3-propanediol, 2-ethyl-2-butyl-1,3-propanediol, 2-ethyl-2-isobutyl-1,3-propane diol, 2,2,4-trimethyl-1,6-hexanediol, and any combinations thereof; and aromatic diols including 1,2-benzenediol, 1,3-benzenediol, 1,4-benzenediol, 1,3-naphthalenediol, 1,4-naphthalenediol, 1,7-naphthalenediol, 2,3-naphthalenediol, 2,6-naphthalenediol, 2,7-naphthalenediol,nd any combinations thereof.

The amount of the diol may be from about 1 to about 2 parts by mole with respect to 1 part by mole of a total amount of the dicarboxylic acid.

In polymerization for the preparation of the biodegradable polyester resin, the dicarboxylic acid and the diol may react in a stoichiometric ratio, for example, about in a 1:1 ratio by mole. The molar ratio of the dicarboxylic acid to diol may be, for example, 1:1. However, to facilitate the reaction and increase the yield, a larger amount of the diol than the amount of the dicarboxylic acid may be used.

In some embodiments, the dicarboxylic acid may include an aromatic dicarboxylic acid and an aliphatic dicarboxylic acid, the diol may include at least one selected from an aliphatic diol and an aromatic diol, and the amount of the metal (M) in the catalyst and the amount of the element (L) may satisfy the following condition on the basis of a weight ratio: $1.5 \leq M/L \leq 3.5$.

If the M/L is less than 1.5 (M/L < 1.5), the synthesized biodegradable polyester resin may have good chromaticity but a high acid value. If the M/L is greater than 3.5 (M/L > 3.5), the synthesized biodegradable polyester resin may have a low acid value, but poor chromaticity.

In some other embodiments, the dicarboxylic acid may be a substituted or unsubstituted C4-C10 aliphatic dicarboxylic acid, the diol may include a substituted or unsubstituted C2-C10 aliphatic diol, and the amount of the metal (M) in the catalyst and the amount of the element (L) may satisfy the following condition on the basis of a weight ratio: $3.0 \leq M/L \leq 8.0$.

If the M/L is less than 3.0 (M/L < 3.0), the reaction rate may be low to reduce the yield of the biodegradable polyester resin. If the M/L is greater than 8.0 (M/L > 8.0), the synthesized biodegradable polyester resin may have deteriorated thermal stability and poor color.

When the composition has a M/L satisfying the above condition (i.e., $3.0 \leq M/L \leq 8.0$), the biodegradable polyester resin may have a weight average molecular weight of about 150,000 or greater and a tensile strength of about 45 MPa or greater as measured according to the ASTM D638.

The catalyst may include at least one metal compound selected from the group consisting of calcium acetate, manganese acetate, magnesium acetate, zinc acetate, monobutyltin oxide, dibutyl tin oxide, dibutyltin dichloride, monobutylhydroxy tin oxide, octyltin, tetrabutyltin, tetraphenyltin, triethyl titanate, acetyl tripropyl titanate, tetramethyl titanate, tetrapropyl titanate, tetraisopropyl titanate, tetra n-butyl titanate, and tetra(2-ethylhexyl)titanate.

For example, the metal (M) of the catalyst may include at least one metal selected from the group consisting of titanium (Ti), tin (Sn), antimony (Sb), cerium (Ce), germanium (Ge), zinc (Zn), cobalt (Co), manganese (Mn), iron (Fe), aluminum (Al), magnesium (Mg), calcium (Ca), and strontium (Sr).

The amount of the catalyst may be from about 0.001 to about 3 parts by weight based on 100 parts by weight of a total weight of the dicarboxylic acid and the diol.

In some embodiments, when the dicarboxylic acid includes an aromatic dicarboxylic acid and an aliphatic dicarboxylic acid, and the diol includes at least one diol selected from an aliphatic diol and an aromatic diol, the amount of the catalyst may be from about 0.01 to about 3 parts by weight based on a total weight of the dicarboxylic acid and the diol. In this case with an amount of the catalyst within this range, the polymerization reaction may occur with high efficiency, and consequentially the synthesized biodegradable polyester resin may not have deteriorated physical properties such as deteriorated chromaticity.

In some other embodiments, when the dicarboxylic acid is a substituted or unsubstituted C4-C10 aliphatic dicarboxylic acid, and the diol includes a substituted or unsubstituted C2-C10 aliphatic diol, the amount of the catalyst may be from about 0.001 to about 0.5 parts by weight based on 100 parts by weight of a total weight of the dicarboxylic acid and the diol. In this case with an amount of the catalyst within this range, the polymerization reaction in the preparation of a biodegradable polyester resin may not be delayed, and the rate of backward reaction may be suppressed to prevent decomposition reaction.

The catalyst may facilitate the esterification and the polycondensation reactions involved in the preparation of a biodegradable polyester resin.

The element (L) in the deactivating agent may include phosphorus (P), and the deactivating agent may include at least one phosphorus compound selected from the group consisting of phosphorous acid, phosphonous acid, trimethyl phosphite, triethyl phosphite, tripropyl phosphite, triphenyl phosphate, sodium phosphite, sodium hypophosphite, diphenyl isodecyl phosphite, phenyl diisodecyl phosphite, and triisodecyl phosphite.

The composition for preparing a biodegradable polyester resin, according to any of the above-described embodiments, may further include at least one selected from a color stabilizing agent and a branching agent.

The color stabilizing agent may include at least one phosphate compound selected from the group consisting of trimethyl phosphate, triethyl phosphate, tripropyl phosphate, and triphenyl phosphate.

For example, the amount of the metal (M) in the catalyst and the amount of phosphorus (P) in the color stabilizing agent may satisfy the following condition on the basis of a weight ratio: $3.5 \leq M/P \leq 55.8$.

If the M/P is less than 3.5 (M/P < 3.5), the resulting biodegradable polyester resin may have an increased acid value. On the other hand, if the M/P is greater than 55.8 (M/P > 55.8), the resulting biodegradable polyester resin may have increased yellowness.

In some embodiments, the amount of the metal (M) in the catalyst and the amount of phosphorus (P) in the color stabilizing agent may satisfy the following condition on the basis of a weight ratio: $3.5 \leq M/P \leq 10.5$.

For example, the branching agent may include glycerol, pentaerythritol, tartaric acid, malic acid, citric acid, trimethylolpropane, trimethylolethane, polyether triol, trimesic acid, trimellitic acid, trimellitic anhydride, pyromellitic acid, pyromellitic dianhydride, or a combination thereof.

For example, the branching agent may have at least three hydroxy groups. When the branching agent does not have a carboxy (-COOH) group as a functional group, this may help lower the acid value of a biodegradable polyester resin prepared from the composition according to any of the above-described embodiments.

The amount of the branching agent may be from about 0.0005 to about 0.05 parts by weight based on 100 parts by weight of a total weight of the dicarboxylic acid.

In some embodiments, when the dicarboxylic acid includes an aromatic dicarboxylic acid and an aliphatic dicarboxylic acid, and the diol includes at least one diol selected from an aliphatic diol and an aromatic diol, the amount of the branching agent may be from about 0.0005 to about 0.05 part by mole with respect to 1 part by mole of the dicarboxylic acid.

When the amount of the branching agent is within this range, the polymerization time may be reduced, and a biodegradable polyester resin with a low acid value and good strength may be obtained

When the dicarboxylic acid is a substituted or unsubstituted C4-C10 aliphatic dicarboxylic acid, and the diol includes a substituted or unsubstituted C2-C10 aliphatic diol, the amount of the branching agent may be from about 0.001 to about 0.05 part by mole with respect to 1 part by mole of the dicarboxylic acid.

When the amount of the branching agent is within this range, a biodegradable polyester resin prepared using the composition according to any of the above-described embodiments may be prevented from gelation and have a desired degree of polymerization.

Hereinafter, embodiments of a method of preparing a biodegradable polyester resin will now be described.

Another aspect of the present disclosure provides a method of preparing a biodegradable polyester resin, the method including: adding a dicarboxylic acid, a diol, a catalyst, and a deactivating agent including an element (L) that reduces the activity of the catalyst into a reactor, and esterifying the dicarboxylic acid and the diol (esterification step); and polycondensing a product of the esterification step to obtain the biodegradable polyester resin (polycondensation step), wherein the amount of a metal (M) in the catalyst and the amount of the element (L) satisfies the following condition on the basis of a weight ratio: $1.5 \leq M/L \leq 8.0$.

In some embodiments of the method, the dicarboxylic acid may include an aromatic dicarboxylic acid and an aliphatic dicarboxylic acid, the diol may include at least one selected from an aliphatic diol and an aromatic diol, and the amount of the metal (M) of the catalyst and the amount of the element (L) may satisfy the following condition on the basis of a weight ratio: $1.5 \leq M/L \leq 3.5$.

The method of preparing such a biodegradable polyester resin as described above, according to any embodiment, may be a high polymerization method.

As used herein, the term「high polymerization method」refers to polymerization of synthesizing a resin having a weight average molecular weight of about 130,000~150,000 through esterification and polycondensation reactions.

In some other embodiments of the method, the dicarboxylic acid may be a substituted or unsubstituted C4-C10 aliphatic dicarboxylic acid, the diol may include a substituted or unsubstituted C2-C10 aliphatic diol, and the amount of the metal (M) of the catalyst and the amount of the element (L) may satisfy the following condition on the basis of a weight ratio: $3.0 \leq M/L \leq 8.0$.

The esterification reaction may be performed at about 160~220 °C for about 60~300 minutes, and in some embodiments, at about 160~200°C for about 60~300 minutes, and in some other embodiments, at about 180~220°C for about 60~120 minutes.

An end point of the esterification reaction may be determined by measuring the amount of water/alcohol generated as byproducts of the reaction.

For example, when about 0.6 mol of adipic acid and about 0.4 mol of dimethyl terephthalate are used as the dicarboxylic acid, and 1.3 mol of 1,4-butanediol is used as the diol, the esterification reaction may be ended upon production of about 90% or more of each of the maximum theoretical yields (about 1.2 mol and about 0.8 mol, respectively) of water and methanol to be generated as byproducts, i.e., upon production of about 1.08 mol or more of water and about 0.72 mol or more of methanol, under the assumption that the entire amounts of the adipic acid and the dimethyl terephthalate are reacted with the 1,4-butanediol.

In some embodiments, when about 1 mol of succinic acid is used as the dicarboxylic acid and about 1.3 mol of 1,4-butanediol is used as the diol, the esterification reaction may be ended upon production of about 90% or more of the maximum theoretical yield (about 2 mol) of water to be generated as a byproduct, i.e., about 1.8 mol or greater of water, under the assumption that the entire amount of the succinic acid is reacted with the 1,4-butanediol.

To increase the reaction rate of the esterification reaction by shifting a chemical equilibrium, water and alcohol generated as byproducts and/or unreacted diol may be discharged out of the reaction system by evaporation or distillation.

An oligomer having an ester bond may be produced through the esterification reaction.

A reaction product of the esterification reaction, i.e., an oligomer may be further polycondensed to have a higher molecular weight.

The polycondensation reaction may be performed at about 220 °C to about 260 °C for about 40 minutes to about 300 minutes, and in some embodiments, at about 220°C to about 260°C for about 120 minutes to about 300 minutes, and in some other embodiments, about 220°C to about 250°C for about 40 minutes to about 300 minutes.

The polycondensation reaction may be performed at a pressure of about 2 torr or less. By performing the polycondensation reaction under such vacuum conditions, a biodegradable polyester resin having a high molecular weight may be obtained while the unreacted source materials (unreacted monomers), low-molecular weight oligomers, and water/butanol as generated byproducts are removed.

In some embodiments, the method of preparing the biodegradable polyester resin may further include, after the polycondensation step, adding about 0.01 to about 5 parts by weight of a chain extender based on 100 parts by weight of the biodegradable polyester resin to allow reaction of the chain extender with the biodegradable polyester resin (chain extension step).

For example, the amount of the chain extender added may be from about 0.01 to about 3 parts by weight based on 100 parts by weight of the biodegradable polyester resin.

When the amount of the chain extender is within this range, the resulting biodegradable polymer resin may have a reduced toxicity because only a small amount of the chain extender may remain therein, and thus may be applicable as, for example, a food packing material.

As described above, a composition for preparing a biodegradable polyester resin may form a biodegradable polyester resin with improved chromaticity and good thermal stability.

In some embodiments, when the dicarboxylic acid includes an aromatic dicarboxylic acid and an aliphatic dicarboxylic acid, and the diol includes at least one selected from an aliphatic diol and an aromatic diol, the biodegradable polyester resin may have an acid value greater than 0 to about 1.5 mgKOH/g or less, and a b* value of 6 or less in the color space of CIE1976 L*a*b*, wherein L* denotes lightness value, a* denotes red value, b* denotes yellow value.

When the dicarboxylic acid is a substituted or unsubstituted C4-C10 aliphatic dicarboxylic acid, and the diol includes a substituted or unsubstituted C2-C10 aliphatic diol, the biodegradable polyester resin may have an acid value greater than 0 to about 1.6 mgKOH/g or less, and a b* value of 10 or less in the color space of CIE1976 L*a*b*, wherein L* denotes lightness value, a* denotes red value, b* denotes yellow value.

MODE OF THE INVENTION

One or more embodiments of the present disclosure will now be described in detail with reference to the following examples. However, these examples are only for illustrative purposes and are not intended to limit the scope of the one or more embodiments of the present disclosure.

Example 1: Preparation of poly(butylene adipate-co-terephthalate) (PBAT) resin

(Esterification Reaction)

About 135.18 g (1.5mol) of 1,4-butanediol, 75.99 g (0.52 mol) of adipic acid, 0.45 g (0.0049 mol) of glycerol, an amount of tetra n-butyl titanate, and an amount of phosphorous acid as represented in Table 1 were put into a 500-mL, 3-neck round-bottomed flask equipped with a condenser, a nitrogen inlet, and a stirrer to prepare a mixture. After the temperature of the mixture was increased to about 185°C, the mixture was stirred for reaction until about 90% or more (i.e., 17 mL) of the maximum theoretical yield of water is produced, while the produced water was completely discharged through the condenser. After 93.21 g (0.48 mol) of dimethyl terephthalate was added into the 3-neck round-bottomed flask, the mixture was stirred for reaction until about 90% or more (i.e., 35 mL) of the maximum theoretical yield of methanol is produced, while the produced methanol was discharged out of the 3-neck round-bottomed flask through the condenser.

(Polycondensation reaction)

Subsequently, the temperature of the 3-neck round-bottomed flask was increased to about 240°C under vacuum at a pressure of 2 torr or less, the reaction was performed for a time period as represented in Table 1, and the content in the flask was discharged out of the flask, thereby obtaining a PBAT resin.

Examples 2, 3, and 5 to 8: Preparation of PBAT resins

PBAT resins were prepared in the same manner as in Example 1, except that the amounts of tetra n-butyl titanate and phosphorous acid were varied, and an amount of trimethyl phosphate was further added to obtain a mixture for the esterification reaction, as represented in Table 1.

Example 4: Preparation of PBAT resin

PBAT resin was prepared in the same manner as in Example 1, except that the amounts of tetra n-butyl titanate and phosphorous acid were varied, and an amount of triphenyl phosphate was further added to obtain a mixture for the esterification reaction, as represented in Table 1.

Comparative Examples 1 and 2: Preparation of PBAT resins

PBAT resins were prepared in the same manner as in Example 1, except that the amounts of tetra n-butyl titanate and phosphorous acid were varied as represented in Table 1.

The amounts of monomers and additives used in Examples 1 to 8 and Comparative Examples 1 and 2, and the polycondensation reaction time are represented in Table 1. The amount ratios (Ti/L) of titanium (Ti) in tetra n-butyl titanate to phosphorus (L) in phosphorous acid, and the amount ratios (Ti/P) of titanium (Ti) in tetra n-butyl titanate to phosphorus (P) in trimethyl phosphate or triphenyl phosphate were calculated and are represented in Table 1.

[Table 1]

| Example | TBT (g(mmol)) | PPA (g(mmol)) | TMP or TPP (g(mmol)) | Ti/L | Ti/P | Polycondensation reaction time (min) |
|---|---|---|---|---|---|---|
| Example 1 | 0.15 (0.44) | 0.037 (0.45) | TMP:0 | 1.51 | - | 135 |
| Example 2 | 0.15 (0.44) | 0.037 (0.45) | TMP:0.01 (0.07) | 1.51 | 9.54 | 133 |
| Example 3 | 0.15 (0.44) | 0.025 (0.30) | TMP: 0.01 (0.07) | 2.23 | 9.54 | 110 |
| Example 4 | 0.15 (0.44) | 0.018 (0.22) | TPP: 0.01 (0.031) | 3.1 | 22.23 | 151 |
| Example 5 | 0.15 (0.44) | 0.025 (0.30) | TMP:0.018 (0.13) | 2.23 | 5.3 | 164 |
| Example 6 | 0.15 (0.44) | 0.025 (0.30) | TMP: 0.025 (0.18) | 2.23 | 3.82 | 190 |
| Example 7 | 0.15 (0.44) | 0.025 (0.30) | TMP: 0.027 (0.19) | 2.23 | 3.53 | 185 |
| Example 8 | 0.15 (0.44) | 0.025 (0.30) | TMP: 0.0018 (0.013) | 2.23 | 53.02 | 135 |
| Comparative Example 1 | 0.15 (0.44) | 0.05 (0.61) | TMP: 0 | 1.12 | - | 212 |

(continued)

| Example | TBT (g(mmol)) | PPA (g(mmol)) | TMP or TPP (g(mmol)) | Ti/L | Ti/P | Polycondensation reaction time (min) |
|---|---|---|---|---|---|---|
| Comparative Example 2 | 0.24 (0.71) | 0.025 (0.30) | TMP: 0 | 3.57 | - | 142 |
| TBT: tetra n-butyl titanate<br>PPA: phosphorous acid<br>TMP: trimethyl phosphate<br>TPP: triphenyl phosphate | | | | | | |

Examples 9 to 12: Preparation of a poly(butylene succinate) (PBS) resins (Esterification reaction)

The amounts of 1,4-butanediol , succinic acid , glycerol , tetra-n-butyl titanate , and phosphorous acid as represented in Table 2 were put into a 500-mL, 3-neck round-bottomed flask equipped with a condenser, a nitrogen inlet, and a stirrer, and stirred to prepare compositions for preparing a biodegradable polyester resin. The temperature of each of the compositions for preparing a biodegradable polyester resin was raised to a temperature as represented in Table 3, followed by stirring the composition for a time period as represented in Table 3 for the reaction under a nitrogen atmosphere.

(Polycondensation reaction)

Subsequently, the temperature of the 3-neck round-bottomed flask was increased to a temperature as represented in Table 3 under vacuum at a pressure of 1 torr or less, thereafter the reaction was performed for a time period as represented in Table 3, and the content in the flask was discharged out of the flask, thereby obtaining a PBS resin.

Example 13: Preparation of PBS resin

PBS resin was prepared in the same manner as in Examples 9 to 12, except that triphenyl phosphite, instead of phosphorous acid, was used.

Comparative Example 3: Preparation of PBS resin

PBS resin was prepared in the same manner as in Examples 9 to 12, except that phosphorous acid was not used.

Comparative Example 4: Preparation of PBS resin

PBS resin was prepared in the same manner as in Examples 9 to 12, except that malic acid and triphenyl phosphite, instead of glycerol and phosphorous acid, respectively, were used.

Comparative Examples 5 and 6: Preparation of PBS resin

PBS resins were prepared in the same manner as in Examples 9 to 12, except that the amounts of tetra n-butyl titanate and phosphorous acid were varied as represented in Table 2.
The amounts of monomers and additives used in Examples 9 to 13 and Comparative Examples 3 to 6 are represented in Table 2, and the conditions for the esterification and polycondensation reactions are represented in Table 3. The amount ratios (Ti/L) of titanium (Ti) in tetra n-butyl titanate to phosphorus (L) in phosphorous acid or triphenyl phosphite were calculated and are represented in Table 2.

[Table 2]

| Example | BDO (g (mol)) | SA (g (mol)) | GC or MA (g (mol)) | TBT (g (mmol)) | PPA or TPPi (g (mmol)) | Ti/L |
|---|---|---|---|---|---|---|
| Example 9 | 103.62 (1.15) | 118.09 (1) | GC: 0.3 (0.0033) | 0.3 (0.88) | PPA: 0.025 (0.3) | 4.47 |

(continued)

| Example | BDO (g (mol)) | SA (g (mol)) | GC or MA (g (mol)) | TBT (g (mmol)) | PPA or TPPi (g (mmol)) | Ti/L |
|---|---|---|---|---|---|---|
| Example 10 | 103.62 (1.15) | 118.09 (1) | GC: 0.15 (0.0016) | 0.3 (0.88) | PPA: 0.025 (0.3) | 4.47 |
| Example 11 | 103.62 (1.15) | 118.09 (1) | GC: 0.15 (0.0016) | 0.3 (0.88) | PPA: 0.02 (0.24) | 5.59 |
| Example 12 | 103.62 | 118.09 | GC: 0.15 | 0.3 | PPA: 0.017 | 6.57 |
|  | (1.15) | (1) | (0.0016) | (0.88) | (0.21) |  |
| Example 13 | 103.62 (1.15) | 118.09 (1) | GC: 0.15 (0.0016) | 0.3 (0.88) | TPPi: 0.1 (0.3) | 4.23 |
| Comparative Example 3 | 103.62 (1.15) | 118.09 (1) | GC: 0.3 (0.0033) | 0.3 (0.88) | - | - |
| Comparative Example 4 | 103.62 (1.15) | 118.09 (1) | MA: 0.4 (0.0034) | 0.23 (0.68) | TPPi: 0.1 (0.3) | 3.24 |
| Comparative Example 5 | 103.62 (1.15) | 118.09 (1) | GC: 0.15 (0.0016) | 0.3 (0.88) | PPA: 0.04 (0.48) | 2.79 |
| Comparative Example 6 | 103.62 (1.15) | 118.09 (1) | GC: 0.15 (0.0016) | 0.3 (0.88) | PPA: 0.013 (0.16) | 8.59 |

BDO: 1,4-butanediol
SA: succinic acid
GC: glycerol
MA: malic acid
TBT: tetra-n-butyl titanate
PPA: phosphorous acid
TPPi: triphenyl phosphite

[Table 3]

| Example | Esterification reaction temperature (°C) | Esterification reaction time (min) | Polycondensation reaction temperature (°C) | Polycondensation reaction time (min) |
|---|---|---|---|---|
| Example 9 | 200 | 90 | 240 | 180 |
| Example 10 | 200 | 70 | 240 | 270 |
| Example 11 | 200 | 80 | 240 | 270 |
| Example 12 | 200 | 80 | 240 | 240 |
| Example 13 | 200 | 80 | 240 | 300 |
| Comparative Example 3 | 200 | 90 | 240 | 120 |
| Comparative Example 4 | 200 | 70 | 240 | 180 |
| Comparative Example 5 | 200 | 80 | 240 | 480 |
| Comparative Example 6 | 200 | 80 | 240 | 160 |

Evaluation Example 1: Evaluation of characteristics of PBAT resin

Characteristics of the PBAT resins of Examples 1 to 8 and Comparative Examples 1 and 2, including weight average molecular weight (Mw), chromaticity, acid value, change in melt index, and tensile strength decreasing rate, were evaluated in the following manner. The results are shown in Table 4.

< Mw measurement >

Each of the PBAT resins of Examples 1 to 8 and Comparative Examples 1 and 2 were dissolved in chloroform at about 1wt% to obtain a PBAT resin solution. This PBAT resin solution was analyzed by gel permeation chromatography (GPC) to identify a weight average molecular weight. The measurement temperature was about 35 °C and the flow rate was about 1 ml/min.

<Chromaticity measurement>

(Manufacture of chip)

Each of the PBAT resins of Examples 1 to 8 and Comparative Examples 1 and 2 was melted at about 150°C by a twin-screw extruder (available from Changsung P&R Co., Ltd, L/D ratio: 36/1, diameter: 24.2 mm), and then pelletized using an injection molding machine (available from FANUC Co., Ltd, S-2000i 50B), to thereby manufacture chips.

(Chromaticity measurement)

A glass cell (Inner diameter: 10 mm, and Depth: 50 mm) was filled with the chips manufactured from the PBAT resins of Examples 1 to 8 and Comparative Examples 1 and 2, and L*, a*, and b* values thereof in the color space of CIE-L*a*b* (CIE 1976) were measured using a Konica Minolta chroma meter. The "L*", "a*", and "b*" values are indices of tone indicated in the color space of CIE-L*a*b* (CIE 1976), and in particular, the "L*" value represents lightness, the "a*" value represents the degree of redness, and the "b*" value represents the degree of yellowness. The larger the "L*" value, the higher the lightness. The larger the "a*" value, the higher the degree of redness, and the larger the "b*" value, the higher the degree of yellowness.

< Acid value measurement >

Each of the PBAT resins of Examples 1 to 8 and Comparative Examples 1 and 2 was dissolved in dichloromethane, followed by cooling and titration with a 0.1N KOH ethyl alcohol solution, thereby to measure an acid value of each of the PBAT resin.

< Change in melt index >

(Measurement of melt index before heating)

A melt index test was performed at a temperature of about 190 °C under a load of about 2.16 kg on the PBAT resins of Examples 1 to 8 and Comparative Examples 1 and 2, according to the ASTM D1238. Then, the amount (in grams) of each of the PBAT resins flowing out through an orifice (Radius: 2mm, and Length: 8mm) for 10 minutes was measured as a melt index.

(Measurement of melt index after heating)

After the chips made of the PBAT resins of Examples 1 to 8 and Comparative Examples 1 and 2 were heated in water at 100°C for about 4 hours, the chips were taken out of the water and dried for about 3 hours, and then a melt index after heating was measured in the same manner as in the measurement of the melt index before heating. Next, change in melt index before and after heating was calculated using Equation 1. The results are shown in Table. 4.

【Equation 1】

Change in melt index = Melt index of resin after heating - Melt index of resin before heating

< Tensile strength decreasing rate >

(Manufacture of film)

After being dried for about 4 hours, the chips of the PBAT resins of Examples 1 to 8 and Comparative Examples 1 and 2 were molded into PBAT films by using a single-screw blown film extruder (available from DAE RYUN MACHINE, L/D ratio: 28:1, die diameter: 45 mm, barrel temperature: 190°C). The resulting PBAT films each had a thickness of about 30 $\mu$m.

(Tensile strength measurement)

The tensile strength of each of the PBAT films was measured according to the ASTM D638.

(Tensile strength decreasing rate)

While being stored in a thermo-hygrostat at a temperature of about 40°C and a relative humidity (RH) of about 75% for about 4 weeks, tensile strengths in machine direction (MD) and traverse direction (TD) of each of the PBAT films were measured according to the ASTM D638 at 2-weeks intervals, twice in total for each PBAT film. Next, a tensile strength decreasing rate of each of the PBAT films was calculated using Equation 2. The results are shown in Table 4. The tensile strength decreasing rates in Table 4 are each an average of the tensile strength decreasing rates in MD and TD of a PBAT film.

【Equation 2】

Tensile strength decreasing rate (%) = (Initial tensile strength - Tensile strength after storage for a predetermined time) / (Initial tensile strength) * 100

[Table 4]

| Example | Mw (g/mol) | Chromaticity (L*/b*) | Acid value (mgKOH/g) | Change in melt index | Tensile strength decreasing rate (%) | |
|---|---|---|---|---|---|---|
| | | | | | After 2 weeks | After 4 weeks |
| Example 1 | 141,000 | 84.79/2.35 | 1.2 | 4.2 | 6 | 22 |
| Example 2 | 141,000 | 86.56/0.36 | 1.19 | 4.1 | 6 | 21 |
| Example 3 | 142,000 | 82.75/5.21 | 1.14 | 3.9 | 9 | 25 |
| Example 4 | 140,000 | 80.09/5.06 | 1.25 | 4.1 | 7 | 22 |
| Example 5 | 140,000 | 84.2/3.2 | 1.31 | 4.5 | 10 | 27 |
| Example 6 | 142,000 | 85.1/1.9 | 1.5 | 5.9 | 12 | 29 |
| Example 7 | 143,000 | 83.62/2.3 | 1.5 | 6.0 | 11 | 30 |
| Example 8 | 147,000 | 84.24/0.94 | 1.23 | 4.3 | 9 | 26 |
| Comparative Example 1 | 150,000 | 85.31/-1.37 | 3.2 | 9.5 | 24 | 41 |

(continued)

| Example | Mw (g/mol) | Chromaticity (L*/b*) | Acid value (mgKOH/g) | Change in melt index | Tensile strength decreasing rate (%) | |
|---|---|---|---|---|---|---|
| | | | | | After 2 weeks | After 4 weeks |
| Comparative Example 2 | 145,000 | 80.59/11.56 | 0.97 | 3.2 | 5 | 14 |

Referring to Table 4, the PBAT films of the biodegradable polyester resins of Examples 1 to 8 were found to have a lower degree of yellowness (b* value) and a lower acid value, and consequentially a smaller change in melt index before and after heating and a lower tensile strength decreasing rate, compared to those of the PBAT films of the biodegradable polyester resins of Comparative Examples 1 and 2. Although the PBAT film of the biodegradable polyester resin of Comparative Example 1 had a lower degree of yellowness (b* value) but a higher acid value, and consequentially a larger change in melt index before and after heating and a higher tensile strength decreasing rate, compared to those of the PBAT films of Examples 1 to 8. The PBAT film of the biodegradable polyester resin of Comparative Example 2 had a smaller change in melt index before and after heating and a lower tensile strength decreasing rate, due to a much lower acid value, but had a much higher degree of yellowness (b* value), compared to those of the PBAT films of the biodegradable polyester resins of Examples 1 to 8.

Evaluation Example 2: Evaluation of characteristics of PBS resin

Characteristics of the PBS resins of Examples 9 to 13 and Comparative Examples 3 to 6, including weight average molecular weight (Mw), chromaticity, acid value, tensile strength, and change in melt index, were evaluated in the same manner as in Evaluation Example 1. Durability of each of the PBS resins was evaluated based on the change in melt index before and after heating, according to the following criteria. The results are shown in Table 5.

< Durability evaluation >

Durability was evaluated based on the change in melt index before and after heating, according to the following criteria.

◎ : A change in melt index before and after heating was 10 or less (Excellent).
○: A change in melt index before and after heating was greater than 10 and equal to or less than 20 (Good).
✕: A change in melt index before and after heating was greater than 20 (Poor).

[Table 5]

| Example | Mw (g/mol) | Chromaticity (L*/b*) | Acid value (mgKOH/g) | Tensile strength (Mpa) | Change in melt index | Durability |
|---|---|---|---|---|---|---|
| Example 9 | 214,120 | 88.62/4.3 | 1.51 | 48.5 | 7.0 | ◎ |
| Example 10 | 214,230 | 82/0.27 | 1.59 | 51.1 | 7.5 | ◎ |
| Example 11 | 224,580 | 83.11/1.64 | 1.2 | 51.4 | 6.7 | ◎ |
| Example 12 | 191,200 | 81.04/4.02 | 1.13 | 51.2 | 6.5 | ◎ |
| Example 13 | 207,510 | 80.8/0.89 | 1.39 | 50.5 | 6.7 | ◎ |
| Comparative Example 3 | 186,060 | 80.21/7.8 | 3.44 | 43.5 | 34.4 | ✕ |
| Comparative Example 4 | 216,720 | 88.19/5.05 | 3 | 50.1 | 29 | ✕ |
| Comparative Example 5 | 213,210 | 88.31/4.68 | 1.21 | 50.6 | 6.9 | ◎ |

(continued)

| Example | Mw (g/mol) | Chromaticity (L*/b*) | Acid value (mgKOH/g) | Tensile strength (Mpa) | Change in melt index | Durability |
|---|---|---|---|---|---|---|
| Comparative Example 6 | 211,138 | 80.13/8.23 | 2.1 | 44.1 | 19.8 | ○ |

Referring to Table 5, the PBS films of the biodegradable polyester resins of Examples 9 to 13 were found to have a lower degree of yellowness (b* value) and a lower acid value, compared to those of the PBS films of the biodegradable polyester resins of Comparative Examples 3, 4, and 6, and also have excellent tensile strength and durability. The PBS film of the biodegradable polyester resin of Comparative Example 5 had excellent physical properties but a low productivity because it took a considerable amount of time for the polymerization reaction.

It should be understood that the exemplary embodiments described therein should be considered in a descriptive sense only and not for purposes of limitation. Descriptions of features or aspects within each embodiment should typically be considered as available for other similar features or aspects in other embodiments. While one or more embodiments of the present invention have been described with reference to the figures, it will be understood by those of ordinary skill in the art that various changes in form and details may be made therein without departing from the spirit and scope of the present invention as defined by the following claims.

**Claims**

1. A composition for preparing a biodegradable polyester resin, the composition comprising:

   a dicarboxylic acid;
   a diol;
   a catalyst; and
   a deactivating agent comprising an element (L) that may reduce the activity of the catalyst,
   wherein the amount of a metal (M) in the catalyst and the amount of the element (L) satisfy the following condition on the basis of a weight ratio:

$$1.5 \leq M/L \leq 8.0.$$

2. The composition of claim 1, wherein the dicarboxylic acid comprises an aromatic dicarboxylic acid and an aliphatic dicarboxylic acid,
   the diol comprises at least one selected from an aliphatic diol and an aromatic diol, and
   the amount of the metal (M) in the catalyst and the amount of the element (L) satisfy the following condition on the basis of a weight ratio:

$$1.5 \leq M/L \leq 3.5.$$

3. The composition of claim 1, wherein the dicarboxylic acid is a substituted or unsubstituted C4-C10 aliphatic dicarboxylic acid,
   the diol comprises a substituted or unsubstituted C2-C10 aliphatic diol, and the amount of the metal (M) in the catalyst and the amount of the element (L) satisfy the following condition on the basis of a weight ratio:

$$3.0 \leq M/L \leq 8.0.$$

4. The composition of claim 1, wherein the catalyst comprises at least one metal compound selected from the group consisting of calcium acetate, manganese acetate, magnesium acetate, zinc acetate, monobutyl tin oxide, dibutyl tin oxide, dibutyltin dichloride, monobutylhydroxy tin oxide, octyltin, tetrabutyl tin, tetraphenyl tin, triethyl titanate, acetyl tripropyl titanate, tetramethyl titanate, tetrapropyl titanate, tetraisopropyl titanate, tetra n-butyl titanate, and tetra(2-ethylhexyl)titanate, and
   the amount of the catalyst is from about 0.001 to about 3 parts by weight based on 100 parts by weight of a total amount of the dicarboxylic acid and the diol.

5. The composition of claim 2, wherein the amount of the catalyst is from about 0.01 to about 3 parts by weight based on 100 parts by weight of a total amount of the dicarboxylic acid and the diol.

6. The composition of claim 3, wherein the amount of the catalyst is from about 0.001 to about 0.5 parts by weight based on 100 parts by weight of a total amount of the dicarboxylic acid and the diol.

7. The composition of claim 1, wherein the element (L) comprises phosphorus (P), and the deactivating agent comprises at least one phosphorus compound selected from the group consisting of phosphorous acid, phosphonous acid, trimethyl phosphite, triethyl phosphite, tripropyl phosphite, triphenyl phosphite, sodium phosphite, sodium hypophosphite, diphenyl isodecyl phosphite, phenyl diisodecyl phosphite, and trisisodecyl phosphite.

8. The composition of claim 1, wherein the composition further comprises at least one selected from a color stabilizing agent and a branching agent.

9. The composition of claim 8, wherein the branching agent comprises glycerol, pentaerythritol, tartaric acid, malic acid, citric acid, trimethylolpropane, trimethylolethane, polyether triol, trimesic acid, trimellitic acid, trimellitic anhydride, pyromellitic acid, pyromellitic dianhydride, or a combination thereof, and the amount of the branching agent is from about 0.0005 to about 0.05 part by mole based on 1 part by mole of the dicarboxylic acid.

10. A method of preparing a biodegradable polyester resin, the method comprising:

adding a dicarboxylic acid, a diol, a catalyst, and a deactivating agent including an element (L) that may reduce the activity of the catalyst into a reactor, and esterifying the dicarboxylic acid and the diol (esterification step); and polycondensing a product of the esterification step to obtain the biodegradable polyester resin (polycondensation step);
wherein the amount of a metal (M) in the catalyst and the amount of the element (L) satisfy the following condition on the basis of a weight ratio:

$$1.5 \leq M/L \leq 8.0.$$

11. The method of claim 10, wherein the dicarboxylic acid comprises an aromatic dicarboxylic acid and an aliphatic dicarboxylic acid,
the diol comprises at least one selected from an aliphatic diol and an aromatic diol, and
the amount of the metal (M) in the catalyst and the amount of the element (L) satisfy the following condition:

$$1.5 \leq M/L \leq 3.5.$$

12. The method of claim 10, wherein the dicarboxylic acid is a substituted or unsubstituted C4-C10 aliphatic dicarboxylic acid,
the diol comprises a substituted or unsubstituted C2-C10 aliphatic diol, and the amount of the metal (M) in the catalyst and the amount of the element (L) satisfy the following condition on the basis of a weight ratio:

$$3.0 \leq M/L \leq 8.0.$$

13. The method of claim 10, wherein the method further comprises, after the polycondensation step, adding about 0.01 to about 5 parts by weight of a chain extender based on 100 parts by weight of the biodegradable polyester to allow reaction of the chain extender with the biodegradable polyester resin (chain extension step).

14. The method of claim 11, wherein the biodegradable polyester resin has a weight average molecular weight of about 130,000 to about 150,000.

15. The method of claim 11, wherein the biodegradable polyester resin has an acid value greater than 0 to about 1.5 mgKOH/g or less, and a b* value of 6 or less in the color space of CIE1976 L*a*b*, wherein L* denotes lightness value, a* denotes red value, b* denotes yellow value.

16. The method of claim 12, wherein the biodegradable polyester resin has an acid value greater than 0 to about 1.6 mgKOH/g or less, and a b* value of 10 or less in the color space of CIE1976 L*a*b*, wherein L* denotes lightness value, a* denotes red value, b* denotes yellow value.

## INTERNATIONAL SEARCH REPORT

| International application No. |
|---|
| **PCT/KR2014/012853** |

### A. CLASSIFICATION OF SUBJECT MATTER

*C08G 63/12(2006.01)i, C08G 63/82(2006.01)i, C08G 63/16(2006.01)i, C08L 67/02(2006.01)i*

According to International Patent Classification (IPC) or to both national classification and IPC

### B. FIELDS SEARCHED

Minimum documentation searched (classification system followed by classification symbols)

C08G 63/12; C08G 63/85; C08G 63/183; C08G 63/82; C08G 63/78; C08J 5/18; B32B 15/08; C08G 63/16; C08L 67/02

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: polyester, dicarboxylic acid, diol, catalyst, deactivating agent, branching agent, esterification, polycondensation

### C. DOCUMENTS CONSIDERED TO BE RELEVANT

| Category* | Citation of document, with indication, where appropriate, of the relevant passages | Relevant to claim No. |
|---|---|---|
| X | KR 10-2011-0007186 A (BASF SE) 21 January 2011<br>See claims 1-3 and 5; and paragraphs [0052], [0066], [0079], [0093], [0095], [0105], [0106] and [0112]. | 1-16 |
| X | JP 2008-195845 A (TEIJIN FIBERS LTD) 28 August 2008<br>See claims 1-3; and paragraphs [0019] and, [0024]-[0033]. | 1-16 |
| X | KR 10-2013-0078410 A (KOLON INDUSTRIES, INC.) 10 July 2013<br>See abstract; claims 1-3 and 6-12; paragraphs [0025]-[0043]; examples 1-5; and table 1. | 1-16 |
| X | JP 2008-255321 A (TORAY IND INC) 23 October 2008<br>See abstract; paragraphs [0014]-[0028], [0036]-[0039] and [0047]-[0049]; and claims 1-4. | 1-16 |
| A | JP 2003-127278 A (TEIJIN LTD) 08 May 2003<br>See the entire document. | 1-16 |

☐ Further documents are listed in the continuation of Box C.    ☒ See patent family annex.

| | |
|---|---|
| \* Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>09 MARCH 2015 (09.03.2015) | Date of mailing of the international search report<br><br>**10 MARCH 2015 (10.03.2015)** |
| Name and mailing address of the ISA/**KR**<br>    Korean Intellectual Property Office<br>    Government Complex-Daejeon, 189 Seonsa-ro, Daejeon 302-701,<br>    Republic of Korea<br>Facsimile No. 82-42-472-7140 | Authorized officer<br><br><br>Telephone No. |

Form PCT/ISA/210 (second sheet) (July 2009)

INTERNATIONAL SEARCH REPORT
Information on patent family members

International application No.

**PCT/KR2014/012853**

| Patent document cited in search report | Publication date | Patent family member | Publication date |
|---|---|---|---|
| KR 10-2011-0007186 A | 21/01/2011 | CN 102007160 A<br>CN 102007160 B<br>EP 2268704 A1<br>EP 2628758 A1<br>EP 2628758 B1<br>JP 2011-516708 A<br>US 2011-0034662 A1<br>WO 2009-127555 A1 | 06/04/2011<br>29/05/2013<br>05/01/2011<br>21/08/2013<br>08/10/2014<br>26/05/2011<br>10/02/2011<br>22/10/2009 |
| JP 2008-195845 A | 28/08/2008 | NONE | |
| KR 10-2013-0078410 A | 10/07/2013 | NONE | |
| JP 2008-255321 A | 23/10/2008 | NONE | |
| JP 2003-127278 A | 08/05/2003 | NONE | |

Form PCT/ISA/210 (patent family annex) (July 2009)